# EUROPÄISCHE PATENTSCHRIFT

(11) **EP 1 203 810 B1**
(45) Veröffentlichungstag und Bekanntmachung des Hinweises auf die Patenterteilung: **12.10.2005**
(21) Anmeldenummer: 01125611.2
(22) Anmeldetag: 26.10.2001
(51) Int. Cl.: C12C 7/06, C12C 7/17, C12C 13/02, C12C 13/10

(54) **Vorrichtung zur Herstellung von Bierwürze**
Apparatus for the preparation of beer wort
Appareil pour la préparation de moût de bière

(30) Priorität: 03.11.2000 DE 10054575
(43) Veröffentlichungstag der Anmeldung: 08.05.2002
(73) Patentinhaber: Soiné, Stefan, 95359 Kasendorf (DE)
(72) Erfinder: Soiné, Stefan, 95359 Kasendorf (DE)
(74) Vertreter: Rau, Albrecht

(56) Entgegenhaltungen:
- DD-A- 232 926
- DE-A- 19 718 406
- GB-A- 2 186 288
- US-A- 2 592 170
- US-A- 5 365 830

## Beschreibung

Die Erfindung betrifft eine Vorrichtung zur Herstellung von Bierwürze in einem Sudprozeß gemäß dem Oberbegriff des Anspruchs 1.

Die Herstellung von Bierwürze, dem unvergorenen Ausgangsprodukt für die Bierherstellung, erfolgt in dem sogenannten Sudprozeß, der sich in die Hauptverfahrensschritte Maischen, Abläutern, Würzekochen und Heißwürzeklärung gliedert. Für diese Verfahrensschritte sind seit langem eine Reihe von Vorrichtungen bekannt, in denen diese Verfahrensschritte durchgeführt werden. Ferner sind mittlerweile eine Reihe von Alternativen für die beim Sudprozeß erforderliche Energiezuführung zur Erwärmung der Gefäßinhalte, für die Abführung und ggf. energetische Wiederverwertung der anfallenden Kochbrüden sowie für die Trennung der festen und flüssigen Bestandteile der Maische sowie für die Abscheidung des sogenannten Heißtrubes nach dem Kochen der Bierwürze erprobt. Die bekannten Vorrichtungen haben insbesondere für Forschungs-, Lehr- und Demonstrationszwecke zahlreiche Nachteile. Jedes Sudgefäß, üblicherweise bestehend aus einem unteren Boden, einer zylindrischen Zarge und einer oberen Haube, bildet üblicherweise eine durch Schweißnähte untrennbar verbundene Einheit. Da insbesondere im unteren Boden und in der oberen Haube eine Fülle von Funktionselementen, wie z. B. Beheizung, Rühr- und Hackwerk, Meß- und Regelelemente etc. untergebracht sind, legt sich der Betreiber einer solchen Anlage, die üblicherweise eine Lebensdauer von mindestens 30 Jahren besitzt, für diesen langen Zeitraum auf eine ganz spezielle Technologie fest. Eine Variation der Funktionselemente ist nur mit großem finanziellen Aufwand unter der Gefahr, andere Elemente zu beschädigen, möglich, weswegen dies in der Regel unterbleibt. Die zylindrischen Zargen zwischen dem unteren Boden und der oberen Haube sind üblicherweise aus Edelstahl, Stahl oder Kupfer gefertigt und verfügen in der Regel nur über kleine Schaugläser, so daß eine Beobachtung der ablaufenden Misch-, Lösungs-, Sedimentations-, Trenn-, Koch-, und Kogulations-Vorgänge insbesondere über die gesamte Höhe des Gefäßes nicht möglich ist. Darüber hinaus ist versucht worden, durch labortypische Geräte, wie z. B. Erlenmeyerkolben, Bechergläser etc. für Forschungs- und Versuchszwecke brauchbare Vorrichtungen zu schaffen. Es hat sich jedoch gezeigt, daß die in solchen praxisfernen Vorrichtungen gefundenen Ergebnisse nicht oder nur sehr eingeschränkt auf die Praxis übertragbar sind, weil sich insbesondere die Gefäßgeometrien, das Verhältnis von Flüssigkeit zur Grundfläche, die Außenluft berührenden Flüssigkeitsoberfläche, die benetzten Gefäßinnenflächen, die verwendeten Werkstoffe, die Art der Beheizung und die durch Flüssigkeitssäulen oder Atmosphäre herrschenden Drücke einen ganz entscheidenden Einfluß auf die gefundenen Ergebnisse haben.

Aus der GB 2,186,288 A ist eine Vorrichtung zum Brauen von Bier für häusliche Zwecke bekannt. Diese umfasst ein Boden-Modul, ein Zwischen-Modul und ein Deckel-Modul, die voneinander abnehmbar sind. Das Zwischen-Modul umfasst einen eigenen Boden und dient zur Aufnahme eines Braugemischs. Diese bekannte Vorrichtung ist äußerst aufwändig aufgebaut.

Aus der DD 232 926 A1 ist eine Vorrichtung zum Maischen, Gären und Destillieren in einem einzelnen Gefäß bekannt. Dieses aus Glas bestehende Gefäß weist einen Boden und eine zylindrische Wandung auf. An dem Gefäß ist ein Glas-Flansch angearbeitet und eine Normschliffhülse zur Komplettierung mit einem Übergangsstück für weitere Aufsätze angesetzt. Der Glas-Flansch dient zum Einhängen des Gefäßes in ein Maischbad. An das Übergangsstück kann ein Gäraufsatz oder ein Destillationsaufsatz angeschlossen werden.

Aus der US 5,365,830 ist eine Vorrichtung zur Herstellung von Bier mit Kaltgärhefe bekannt. Diese umfasst ein aus zwei Gehäuse-Hälften bestehendes Zwischen-Modul, das als Gärbehälter, Konditionierbehälter und Ausschankbehälter dient. Auf ein Anschlussstück der oberen Gehäuse-Hälfte ist eine Deckelklappe aufschraubbar, durch welche Malzextrakt und Wasser in das Zwischen-Modul einfüllbar sind. Die untere Gehäuse-Hälfte ist mit einem Ständer lösbar verbunden und weist ebenfalls ein Anschlussstück auf. Dieses Anschlussstück ist durch eine Bodenkappe verschließbar. Diese Vorrichtung ist nicht zur Herstellung von Bierwürze geeignet.

Die DE 197 18 406 A 1 offenbart eine Abdichtung für Axial-Ausgleicher von Abgasleitungen für Verbrennungsmotoren. Sie betrifft keine Vorrichtung zur Herstellung von Bierwürze.

Eine aus der US 2,592,170 bekannte Bierbrau-Vorrichtung umfasst einen Koch-Behälter. In der Wandung des Koch-Behälters sind Öffnungen ausgebildet, um Dampf zum Erhitzen des Braugemisches in den Koch-Behälter zu leiten. Des Weiteren sind Sicht-Gläser in der Wandung vorgesehen. Diese erstrecken sich lediglich über einen Umfangs-Abschnitt des Koch-Behälters.

Der Erfindung liegt die Aufgabe zugrunde, eine Vorrichtung zur Herstellung von Bierwürze zu schaffen, die es erlaubt, verschiedene Funktionselemente in einer Vorrichtung möglichst einfach zu kombinieren.

Die Aufgabe wird durch die im kennzeichnenden Teil des Anspruchs 1 aufgeführten Merkmale gelöst. Der Kern der Erfindung besteht darin, das jeweilige Sudgefäß modulartig auszubilden, so daß verschiedene Boden-Module und Deckel-Module einfach miteinander kombiniert und wieder voneinander getrennt werden können.

Weitere vorteilhafte Ausgestaltungen der Erfindung ergeben sich aus den Unteransprüchen.

Zusätzliche Merkmale und Einzelheiten der Erfindung ergeben sich aus der Beschreibung zweier Ausführungsbeispiele anhand der Zeichnung. Es zeigen:
- Fig. 1: eine Querschnittsdarstellung einer erfindungsgemäßen Vorrichtung gemäß einem ersten Ausführungsbeispiel,
- Fig. 2: eine Ausschnittvergrößerung der Vorrichtung gemäß der ersten Aus- führungsform und
- Fig. 3: eine Querschnittsdarstellung einer Vorrichtung gemäß einer zweiten Ausführungsform.

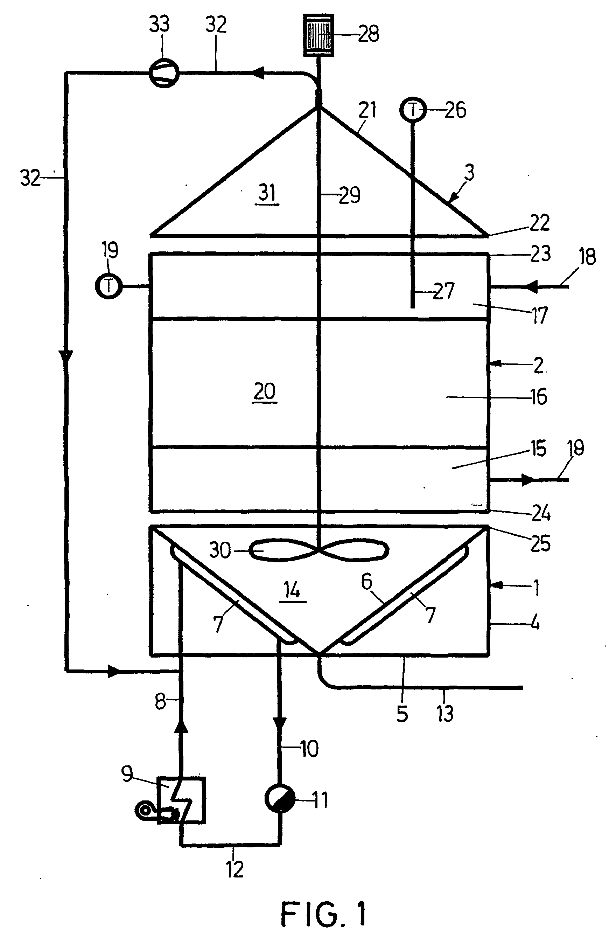

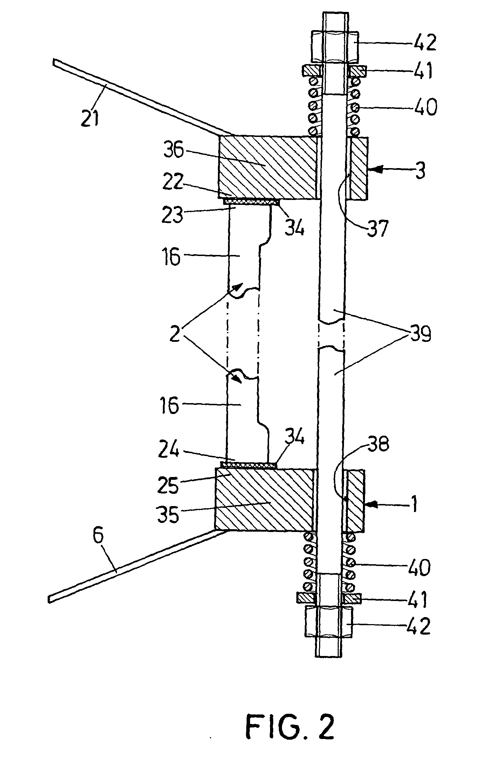

Im folgenden wird unter Bezugnahme auf die Figuren 1 und 2 eine erste Ausführungsform der Erfindung beschrieben. Eine Vorrichtung zum Herstellen von Bierwürze in einem Sudprozeß weist ein Boden-Modul 1, ein darauf angeordnetes Zwischen-Modul 2 sowie ein darauf angeordnetes Deckel-Modul 3 auf. Die Module 1 und 2 sowie 2 und 3 sind druckdicht miteinander lösbar verbunden. Das Boden-Modul 1 weist ein zylindrisches Gehäuse 4 mit einem Boden 5 auf, in dem ein nach oben offener kegelmantelförmiger Sudgefäß-Boden 6 aus Metall, insbesondere aus Edelstahl, angeordnet ist. Der Sudgefäß-Boden 6 weist entlang eines Großteils seiner Unterseite eine Heizung 7 auf. Die Heizung 7 ist über eine Zuführ-Leitung 8 mit einem Dampferzeuger 9 verbunden, von dem heißer Wasserdampf der Heizung 7 zugeführt wird. Das in der Heizung 7 sich bildende Kondensat wird über eine Abführ-Leitung 10 einem Kondensat-Ableiter 11 zugeführt, der wiederum über eine Verbindungs-Leitung 12 mit dem Dampferzeuger 9 verbunden ist. Am untersten Punkt des Sudgefäß-Bodens 6 ist eine Auslaß-Öffnung mit einer daran angeschlossenen Produktauslauf-Leitung 13 angeschlossen. Die Erwärmung der Heizung 7 kann mit Dampf, heißem Öl, heißem Wasser oder einem beliebigen anderen Wärmeträger erfolgen. Ferner ist es möglich, die Erwärmung des Sudgefäß-Bodens 6 mit einer Erdgasflamme, einer Propangasflamme, einer Heizölflamme sowie einer elektrischen Widerstandsheizung, einer elektrischen Strahlungsheizung oder einer elektrischen Induktionsheizung durchzuführen. Ferner kann die Erwärmung durch beheizte Rohrleitungen erfolgen, die in dem durch den Sudgefäß-Boden 6 begrenzten Sudgefäß-Bodenraum 14 angeordnet sind. Es ist auch möglich, den Sudgefäß-Boden 6 kegelkappenförmig, klöpperbodenförmig oder einfach flach auszubilden. Der Boden 6 kann zu seinem Zentrum hin ansteigen, wodurch ein oder mehrere radiale Ausläufe möglich sind. Der Boden kann auch zu seinem Zentrum hin abfallen, wodurch eine mittige Abführung sichergestellt ist.

Das Zwischen-Modul 2 weist einen unteren ringzylindrischen Metallzylinder 15, einen darüber angeordneten, druck- und flüssigkeitsdicht damit verbundenen Glaszylinder 16 sowie einen darauf angeordneten, damit dicht verbundenen oberen Metallzylinder 17 auf. Die Metallzylinder 15 und 17 weisen Anschluß-Leitungen 18 auf. Ferner ist am Metallzylinder 17 eine Meß-Einrichtung 19 zur Erfassung physikalischer Größen, wie z. B. der Temperatur, dem Sudgefäß-Innendruck etc. vorhanden. Der Glaszylinder 16 dient primär der Möglichkeit der Beobachtung von allen Seiten der im Sudgefäß-Innenraum 20 stattfindenden Prozesse, wobei der Glaszylinder aus Glas oder aus einem anderen transparenten, geeigneten Material, wie z. B. einem Kunststoff, gefertigt sein kann. Es ist möglich, das gesamte Zwischen-Modul 2 aus einem Glaszylinder auszubilden. Der Glaszylinder 16 ist derart ausgebildet, daß er sowohl hitzebeständig ist als auch vom Innenraum 20 auf diesen wirkende Druckkräfte aufnehmen kann.

Das Deckel-Modul 3 weist eine nach oben spitz zulaufende kegelmantelförmige Wand 21 aus Metall auf, deren unterer Rand 22 auf dem oberen Rand 23 des Zwischen-Moduls 2 aufliegt. Gleichermaßen liegt der untere Rand 24 des Zwischen-Moduls 2 auf dem oberen Rand 25 des Boden-Moduls 1 auf. Das Deckel-Modul 3 weist eine Meß-Einrichtung 26 zur Messung physikalischer Größen des Innenraums 20 auf und ist hierzu mit einer in den Innenraum 20 ragenden Meß-Sonde 27 verbunden. Mittig oberhalb des Deckel-Moduls 3 ist ein Antriebs-Motor 28 befestigt, der mit einer durch die Wand 21 geführten und bis in den Bodenraum 14 reichenden Welle 29 verbunden ist. Am unteren Ende der Welle 29 ist im Bodenraum 14 ein Rührwerk 30 mit entsprechenden Rotorblättern angeordnet. Am oberen Ende des von der Wand 21 begrenzten Sudgefäß-Deckelraumes 31 ist eine Auslaß-Öffnung mit einer damit verbundenen Abfuhr-Leitung 32 zur Abführung der Kochbrüden aus dem Innenraum 20 vorgesehen. In der Abführ-Leitung 32 ist ein Kompressor 33 zur Verdichtung der Kochbrüden vorgesehen. Hierbei kann es sich um eine Kolbenkompressionsmaschine, eine Drehkolbenkompressionsmaschine oder eine Schraubenkompressionsmaschine handeln, in der die Temperatur des Kochbrüden derart erhöht wird, daß er wieder zur Beheizung der Heizung 7 verwendet werden kann.

Die Abführung der Gase aus dem Innenraum 20 durch die Abführ-Leitung 32 kann bei Atmosphärendruck, unter Unterdruck oder unter Überdruck erfolgen. Entsprechend ist die Siedetemperatur der Flüssigkeit im Innenraum 20 im Vergleich zur Siedetemperatur unter Atmosphärendruck unverändert, reduziert oder erhöht.

Die lösbare druck- und flüssigkeitsdichte Verbindung zwischen den Modulen 1 und 2 sowie 2 und 3 ist in Figur 2 dargestellt. Zwischen dem als Flanschring 35 ausgebildeten oberen Rand 25 des Moduls 1 und dem unteren Rand 24 des Moduls 2 ist ein elastischer Dichtungs-Ring 34 angeordnet. Ebenso ist zwischen dem Modul 2 und dem Modul 3 ein Dichtungs-Ring 34 angeordnet. Am oberen Ende des Bodens 6 ist der Flanschring 35 vorgesehen. Ebenso ist am unteren Ende der Wand 21 ein Flanschring 36 vorgesehen, wobei die Dichtungs-Ringe 34 flächig dicht an diesen anliegen. In den Flanschringen 35 und 36 sind über den Umfang verteilt mehrere übereinander angeordnete Bohrungs-Paare 37, 38 vorgesehen, in denen Spannbolzen 39 angeordnet sind. Oberhalb des Flanschringes 36 sowie unterhalb des Flanschringes 35 ist jeweils eine Spiralfeder 40 vorgesehen, die über eine Beilagscheibe 41 sowie eine Mutter 42 festgelegt ist. Durch die Verwendung der Spiralfedern 40 ist sichergestellt, daß auch bei thermischen Ausdehnungen eine Verbindung der drei Module 1, 2 und 3 mit im wesentlichen gleichem Auflagedruck sichergestellt ist. Besonders vorteilhaft an dem modularen Aufbau der Vorrichtung zur Herstellung von Bierwürze ist, daß zu Experimentier- und Demonstrationszwecken Boden-Module 1 und Deckel-Module 3 verschiedener Art ohne weiteres miteinander kombiniert werden können. Die resultierenden Sudprozesse können durch den Glaszylinder 16 beobachtet werden. Ferner ist eine Reinigung des Innenraumes 20 ohne weiteres möglich.

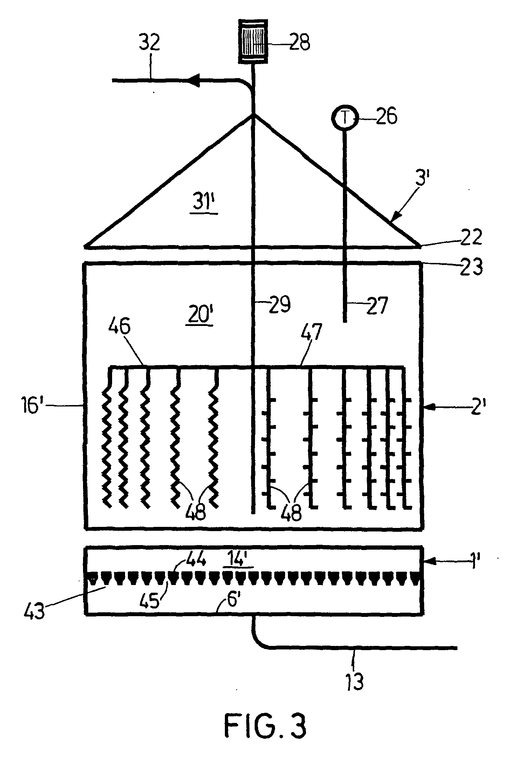

Im folgenden wird unter Bezugnahme auf Figur 3 eine zweite Ausführungsform der Erfindung beschrieben. Identische Teile erhalten dieselben Bezugszeichen wie bei der ersten Ausführungsform, auf deren Beschreibung hiermit verwiesen wird. Konstruktiv unterschiedliche, jedoch funktionell gleichartige Teile erhalten dieselben Bezugszeichen mit einem hochgesetzten Strich. Die in Figur 3 dargestellte Vorrichtung ist als Läuterbottich ausgebildet. Das Modul 1' weist einen flachen Boden 6' auf, in dem eine Phasentrenn-Einrichtung 43 angeordnet ist. Mittels dieser werden die festen und flüssigen Bestandteile in dem Bodenraum 14' voneinander getrennt. Die Phasentrenn-Einrichtung 43 weist eine oder mehrere Metall-Platten 44 mit gefrästen Schlitzen 45 auf. Es ist auch möglich, die Phasentrenn-Einrichtung 43 durch parallel zueinander im engen Abstand voneinander angeordnete dreieckige Metallstäbe auszubilden. Ferner ist es möglich, die Phasentrenn-Einrichtung 43 durch eine oder mehrere Platten, die aus metallischen oder keramischen Sinterwerkstoffen bestehen, auszubilden. Ferner können metallische Siebgewebe verwendet werden. Es können auch die phasentrennenden Flächen in mehreren horizontal liegenden Scheiben, jeweils bestehend aus einer oberen phasentrennenden und einer unteren flüssigkeitsdichten Fläche, vertikal so übereinander angeordnet werden, daß die flüssige Phase in einer gemeinsamen Leitung abgeführt werden kann.

Das Zwischen-Modul 2' weist einen sich über die ganze Höhe des Moduls 2' erstreckenden Glaszylinder 16' auf. In dem Innenraum 20' ist eine mit der Welle 29 drehantreibbar verbundene Auflocker-Einrichtung 46 vorgesehen. Diese weist mit einem Träger 47 verbundene, vertikal nach unten hängende Rechen 48 auf, durch deren Rotation um die Welle 29 die im Innenraum 20' befindliche Substanzen aufgelockert werden.

Im folgenden wird die Montage bzw. Demontage einer Vorrichtung zur Herstellung von Bierwürze beschrieben. Je nach den Bedürfnissen und dem durchzuführenden Prozeß wird ein Modul 1 bzw. 1', ein Modul 2 bzw. 2' sowie ein Modul 3 bzw. 3' ausgewählt. Die Auswahl erfolgt unter dem Gesichtspunkt, welcher Prozeß durchgeführt werden soll. Bei der Auswahl des Zwischen-Moduls 2, 2' spielt auch die Frage eine Rolle, wie groß der Glaszylinder 16, 16' sein soll. Die Module werden anschließend über die Spannbolzen 39 miteinander druck- und flüssigkeitsdicht verschraubt, so daß die entsprechenden Sudprozesse in der Vorrichtung durchgeführt werden können. Sollen andere Module verwendet werden, so kann die leere Vorrichtung jederzeit ohne weiteres zerlegt und in anderer Kombination zusammengebaut werden.

## Patentansprüche

1. Vorrichtung zum Herstellen von Bierwürze in einem Sudprozeß
a) mit einem Boden-Modul (1; 1'),
b) mit einem mit dem Boden-Modul (1; 1') lösbar verbundenen, darauf angeordneten Zwischen-Modul (2; 2'), und
c) mit einem mit dem Zwischen-Modul (2; 2') lösbar verbundenen, darauf angeordneten Deckel-Modul (3; 3'),
**dadurch gekennzeichnet, dass**
d) das Zwischen-Modul (2; 2') einen hitzebeständigen Glaszylinder (16; 16') aufweist,
e) wobei das Boden-Modul (1; 1'), das Zwischen-Modul (2; 2') und das Deckel-Modul (3; 3')
i) über Spannbolzen (39) federnd gegeneinander vorgespannt sind,
ii) druck- und flüssigkeitsdicht miteinander verbunden sind, und
iii) gemeinsam einen Sudgefäß-Innenraum (20) umschließen und
f) wobei der Glaszylinder (16; 16') derart ausgebildet ist, dass er vom Sudgefäß-Innenraum (20) auf diesen wirkende Druckkräfte aufnehmen kann.

2. Vorrichtung gemäß Anspruch 1, **dadurch gekennzeichnet, daß** das Boden-Modul (1; 1') eine Heizung (7) oder eine Phasentrenn-Einrichtung (43) aufweist.

3. Vorrichtung gemäß Anspruch 1, **dadurch gekennzeichnet, daß** das Zwischen-Modul (2) einen mit dem Glaszylinder (16) verbundenen Metallzylinder (15, 17) aufweist.

4. Vorrichtung gemäß Anspruch 1, **dadurch gekennzeichnet, daß** das Boden-Modul (1; 1') und/oder das Deckel-Modul (3; 3') an der dem Zwischen-Modul (2; 2') zugewandten Seite einen Flansch-Ring (35, 36) aufweisen.

5. Vorrichtung gemäß Anspruch 4, **dadurch gekennzeichnet, daß** zwischen dem Flansch-Ring (35, 36) und dem Zwischen-Modul (2; 2') ein Dichtungs-Ring (34) angeordnet ist.

6. Vorrichtung gemäß einem der vorangehenden Ansprüche, **dadurch gekennzeichnet, daß** am Deckel-Modul (3; 3') ein Rührwerk (30) vorgesehen ist.

7. Vorrichtung gemäß einem der vorangehenden Ansprüche, **dadurch gekennzeichnet, daß** das Zwischen-Modul (2; 2') ein umlaufendes Beobachtungsfenster zur Beobachtung des Innenraumes (20; 20') aufweist.

8. Vorrichtung gemäß einem der vorangehenden Ansprüche, **dadurch gekennzeichnet, daß** verschiedene Boden-Module (1; 1') mit verschiedenen Zwischen-Modulen (2; 2') und/oder verschiedenen Deckel-Modulen (3; 3') kombinierbar sind.

## Claims

1. An apparatus for preparing bear wort in a brewing process, comprising
a) a bottom module (1; 1');
b) an intermediate module (2; 2') which is detachably connected to the bottom module (1; 1') and disposed thereon; and
c) a cover module (3; 3') which is detachably connected to the intermediate module (2; 2') and disposed thereon;
**characterized**
d) **in that** the intermediate module (2; 2') comprises a heat-resistant glass cylinder (16; 16');
e) with the bottom module (1; 1'), the intermediate module (2; 2') and the cover module (3; 3')
i) being springily pre-loaded one in relation to the other by clamping bolts (39),
ii) being connected to each other for pressure and liquid tightness, and
iii) jointly enclosing a brewing-vessel interior (20); and
f) with the glass cylinder (16; 16') being embodied such that it can take pressure originating from the brewing-vessel interior (20) and acting thereon.

2. An apparatus according to claim 1, **characterized in that** the bottom module (1; 1') comprises a heating system (7) or a phase-break device (43).

3. An apparatus according to claim 1, **characterized in that** the intermediate module (2) comprises a metal cylinder (15, 17) which is connected to the glass cylinder (16).

4. An apparatus according to claim 1, **characterized in that** the bottom module (1; 1') and/or the cover module (3; 3') comprise a flanged ring (35, 36) on the side turned towards the intermediate module (2; 2').

5. An apparatus according to claim 4, **characterized in that** a sealing 34 is disposed between the flanged ring (35, 36) and the intermediate module (2; 2').

6. An apparatus according to one of the preceding claims, **characterized in that** an agitator (30) is provided on the cover module (3; 3').

7. An apparatus according to one of the preceding claims, **characterized in that** the intermediate module (2; 2') comprises an encircling observation window for observation of the interior (20; 20').

8. An apparatus according to one of the preceding claims, **characterized in that** varying bottom modules (1; 1') can be combined with varying intermediate modules (2; 2') and/or varying cover modules (3; 3').

## Revendications

1. Dispositif servant à produire du moût de bière au cours d'un processus de brassage et qui comporte :
a) un module de fond (1 ; 1'),
b) un module intermédiaire (2 ; 2') relié de manière détachable au module de fond (1 ; 1') et disposé au-dessus de ce dernier, et
c) un module formant couvercle (3 ; 3') relié de manière détachable au module intermédiaire (2 ; 2') et disposé au-dessus de ce dernier,
**caractérisé en ce que**
d) le module intermédiaire (2 ; 2') comporte un cylindre de verre (16 ; 16') résistant à la chaleur,
e) le module de fond (1 ; 1'), le module intermédiaire (2 ; 2') et le module formant couvercle (3 ; 3')
i) sont précontraints élastiquement les uns contre les autres au moyen de boulons de serrage (39),
ii) sont reliés ensemble de manière étanche à la pression et aux liquides, et
iii) délimitent à eux trois un espace intérieur de récipient de brassage (20), et
f) le cylindre de verre (16 ; 16') est réalisé de manière à pouvoir absorber les efforts de pression agissant de l'espace intérieur de récipient de brassage (20) vers lui-même.

2. Dispositif selon la revendication 1, **caractérisé en ce que** le module de fond (1 ; 1') comporte un chauffage (7) ou un dispositif de séparation de phases (43).

3. Dispositif selon la revendication 1, **caractérisé en ce que** le module intermédiaire (2) comporte un cylindre de métal (15, 17) relié au cylindre de verre (16).

4. Dispositif selon la revendication 1, **caractérisé en ce que** le module de fond (1 ; 1') et/ou le module formant couvercle (3 ; 3') comportent, côté module intermédiaire (2 ; 2'), un anneau de bride (35, 36).

5. Dispositif selon la revendication 4, **caractérisé en ce qu'**une bague d'étanchéité (34) est disposée entre l'anneau de bride (35, 36) et le module intermédiaire (2 ; 2').

6. Dispositif selon l'une des revendications précédentes, **caractérisé en ce qu'**il est prévu un mélangeur-agitateur (30) sur le module formant couvercle (3 ; 3').

7. Dispositif selon l'une des revendications précédentes, **caractérisé en ce que** le module intermédiaire (2 ; 2') comporte une fenêtre d'observation circulaire servant à observer l'espace intérieur (20 ; 20').

8. Dispositif selon l'une des revendications précédentes, **caractérisé en ce que** différents modules de fond (1 ; 1') peuvent être combinés à différents modules intermédiaires (2 ; 2') et/ou à différents modules formant couvercle (3 ; 3').
